Europäisches Patentamt

European Patent Office

Office européen des brevets

(11) Publication number: **0 567 487 B1**

# EUROPEAN PATENT SPECIFICATION

(45) Date of publication of patent specification: **14.12.94**    (51) Int. Cl.⁵: **C03B 37/05**

(21) Application number: **92902264.8**

(22) Date of filing: **15.01.92**

(86) International application number:
**PCT/EP92/00087**

(87) International publication number:
**WO 92/12941 (06.08.92 92/21)**

(54) STONE WOOL.

(30) Priority: **16.01.91 GB 9100884**

(43) Date of publication of application:
**03.11.93 Bulletin 93/44**

(45) Publication of the grant of the patent:
**14.12.94 Bulletin 94/50**

(84) Designated Contracting States:
**AT BE CH DE DK ES FR GB IT LI LU NL SE**

(56) References cited:
**FR-A- 2 356 606        GB-A- 961 900
GB-A- 999 119         US-A- 2 520 168
US-A- 2 520 169       US-A- 2 807 048
US-A- 3 159 475**

(73) Proprietor: **Rockwool International A/S
Hovedgaden 501
DK-2640 Hedehusene (DK)**

(72) Inventor: **GROVE-RASMUSSEN, Svend
Straedet 2
Herslev
DK-4000 Roskilde (DK)**
Inventor: **ELMEKILDE HANSEN, Lars
Galpestykket 132
DK-4000 Roskilde (DK)**

(74) Representative: **Lawrence, Peter Robin
Broughton et al
GILL JENNINGS & EVERY,
Broadgate House,
7 Eldon Street
London EC2M 7LH (GB)**

**Description**

Glass wool is well recognised as an efficient insulating material in that wool of low density gives good insulation, that is to say a low Lambda (thermal conductivity) value.

Stone wool is formed from molten mineral such as one or more of diabase, basalt, slag, limestone, dolomite, cement, clay, feldspar, sand or olivin and generally contains stone wool another good insulator, but stone wool needs to be of a higher density than glass wool to achieve a similar Lambda value. Thus more material is required. This is commercially satisfactory for most purposes because it is cheaper to make stone wool than glass wool and so the stone wool is competitive with, or economically preferred over, the corresponding glass wool despite the necessity to have a higher density. Stone wool is cheaper because it is made from cruder, iron-containing melts that are not suitable for glass wool, and glass wool requires purer melt including expensive additives such as soda and borate in the melt.

Stone wool also has some properties which glass wool does not have, i.e. higher temperature resistance and better water repellancy, and better sound absorption, because of the higher density. Consequently stone wool can be used in areas where glass wool is less efficient.

It would of course be highly desirable to be able to reduce the density of the stone wool without decreasing its performance, since the stone wool would then be even more cost effective or preferred over glass wool, for a given degree of thermal insulation. Unfortunately this has not proved possible.

Because of the wish to make stone wool in a cost-effective manner, for it to be competitive with glass wool, the emphasis has always been on maximising the amount of wool that can be obtained in any particular wool-forming apparatus, and it has been accepted that the wool will inevitably contain coarse fibres and significant amounts, e.g., over 25% by weight, of shot having particle size above 63μm.

The industry has accepted these restrictions as inevitable and has concentrated on ways of improving the productivity of processes for making such products.

In the following, the measurement of fibre diameter is referring to the standard accumulated length-based method carried out using a light microscope or a scanning electron microscope. The result on shot content is based on DIN standard No. 4188. The measurements on lambda are based on DIN No. 52612 part 1 and 2. Fibre length is based on 50% quantile on a logarithmic normal distributed graph. Density is calculated from measurement of volume according to DIN 18165 product type WL. The tensile strength measurements are referring to DIN No. 18165, measured on 30 kg/m$^3$ cured product with a binder content of 1.4% by weight.

It would be very desirable to be able to provide stone wool that is formed from stone and that has a Lambda-density relationship much closer to glass wool than any known mineral wool formed from stone.

Stone wool formed from stone melt according to the invention consists of (based on the weight of inorganic components) 70 to 90% by weight stone wool fibres having a diameter of up to 5 μm, 0 to 5% by weight stone wool fibres having a diameter above 5 μm, and 10 to 25% by weight shot having a diameter of at least 63μm, and in which the average diameter of the fibres in the wool is 1 to 4μm, preferably 1.0 to 3.5μm, the ratio of average fibre length to average diameter is from 1000 to 3000, the density is from 15 to 100kg/m$^3$ and the thermal conductivity Lambda is from 30 to 40mW/m·K at 10°C, and the relationship between density and Lambda is shown in the following table.

| Lambda MW/m·K | Maximum Density kg/m$^3$ | Minimum Density kg/m$^3$ |
|---|---|---|
| 40 | 16 | 12 |
| 38 | 18 | 13 |
| 36 | 22 | 15 |
| 35 | 24 | 18 |
| 34 | 29 | 20 |
| 33 | 33 | 23 |
| 32 | 40 | 28 |
| 31 | 55 | 38 |
| 30 | 85 | 50 |

Intermediate values can be obtained by interpolation.

Preferred products consist of (based on the inorganic content of the wool) from 75 to 88, often 77 to 83% by weight fibres having average diameter up to 3.5μm, 0 to 6% fibres measured based on cumulative length based measurement having diameter above 5μm, 10 to 25%, often 15 to 22% by weight shot having

diameter above 63$\mu$m (with the amount of shot above 250$\mu$m generally being 0 to 2, often 0 to 1%) and with an average fibre diameter of from 2.0 to 3.5$\mu$m and a ratio of average fibre length to average diameter typically of from 1,100 to 2,000, preferably 1,200 to 1,600.

The products can be free of bonding agent but preferably include bonding agent, such as a conventional resinous bonding agent eg a phenolic resin.

The products of the invention can also have excellent thermal conductivity values at a given density and the following table shows such values and also, for comparison, shows values for conventional glass wool and for typical high quality mineral wool made by known prior art processes:

| Lambda | Minimum Density kg/m$^3$ | Maximum | Preferred Minimum | Example kg/m$^3$ | Prior Stone Wool kg/m$^3$ | Glass Wool kg/m$^3$ |
|---|---|---|---|---|---|---|
| 40 | 12 | 16 | 12 | 14 | 20 | 13 |
| 38 | 13 | 18 | 14 | 16 | 24 | 14 |
| 36 | 15 | 22 | 18 | 20 | 28 | 17 |
| 35 | 18 | 24 | 20 | 22 | 34 | 19 |
| 34 | 20 | 29 | 23 | 26 | 40 | 22 |
| 33 | 23 | 33 | 26 | 30 | 50 | 25 |
| 32 | 28 | 40 | 31 | 35 | 65 | 30 |
| 31 | 38 | 55 | 39 | 45 | - | 39 |
| 30 | 50 | 85 | 60 | 75 | - | 60 |

Intermediate values can be obtained by interpolation.

The figures in the above table show that the stone wool of the invention has much lower Lambda at a given density than stone wool made by known processes such as GB-A-1,559,117. In particular, it is possible to obtain lower Lambda values, for instance as low as 31 or even down to 30, in the invention whereas the lowest possible Lambda value in prior processes has generally been around 32. This means for example that the necessary density of the new wool to meet the important German lambda classification of 032 must be a mean density of 34 kg/m$^3$, whereas normal mineral wool must have a density of 65 kg/m$^3$. This means that 48% of the wool by weight and thereby the production cost is saved.

As the important part of a production line for mineral wool is limited by the capacity in tons wool per hour when producing this product, the above metioned density reduction means a capacity increase of the production line of 91%, virtually without cost increase.

Other differences between the stone wool of the invention and stone wool made by processes such as GB-A-1,559,117 reside in the amount of shot above 63$\mu$m, which typically was around 30% but is now around 20%, the amount of shot above 250$\mu$m, which typically was 3 to 5% but is now around 1% or less. This reduction in the amount of coarse shot attained by the present invention has the advantages that it reduces the amount of waste of raw material during manufacture of the wool, and the wool itself has reduced harshness and more uniform properties than similar prior art wools.

The percentage of fibres in the wool having diameter above 5$\mu$m which now is frequently 5% or less but in the old process typically was around 25%, and the ratio of average length to average diameter which is now above 1,200 but typically used to be up to around 800 or 900.

Although the products can have a tensile strength of 6kN/m$^2$ preferably the products have a tensile strength of 10 to 20, often 12 to 16, kN/m$^2$.

The stone that is used for forming the fibres in the invention can be any of the stone materials conventionally used for forming product that is known as stone wool, for instance rock, slag, diabase or basalt. Stone wool is characterised by a large variety of oxides, where the sum of $Al_2O_3$ and $SIO_2$ is generally between 40 and 70%, and the rest is other common oxides from minerls, for instance CaO, MgO, $Fe_2O_3$, FeO, $TiO_2$ or $Na_2O$, as described in US-A-2,576,312 and in Danish patent application DK-B-159201 and in particular generally contains iron and is generally free of expensive additives such as soda or borax, although minor amounts of these may be added if desired to modify the melt. It is clearly distinguished from material used for making ceramic fibres or glass fibres by the relationship between its melting point and viscosity and by its chemical composition, as is well known in the art. It should have a melting range throughout which fibres can be formed of above 80°C, often 100 to 200°C and typically melts at above 1400°C but below 1700°C.

In the invention, the amount of coarse fibres is substantially eliminated, the amount of shot is reduced and the ratio of average fibre length to diameter is greatly increased. As a consequence of these modifications, it is possible to achieve the density-Lambda relationship set out above.

The increase in the ratio of fibre length:diameter and the reduction in the amount of coarse fibre and shot cannot be achieved by conventional operation of any of the conventional processes of which we are aware for making stone wool such as those described in US-A-3,709,670 or 4,119,421, GB-A-1,559,117, EP-A-59152, or WO/90/15032. Instead, it is necessary to use a process that combines the features of several processes and to modify or optimise the combination. Preferably the process combines a wall jet effect of the type produced in GB-A-1,559,117 together with a greater than normal acceleration field on the rotors and a reduction in the throughput of melt or productivity of the process. Thus, a preferred way to make the novel products of the invention involves feeding much less melt on to the conventional fiberising apparatus than has been conventional, for any particular density of end product.

A conventional process for forming known stone wool from molten stone uses fiberising apparatus comprising

a fiberising chamber,

fiberising means in the chamber for receiving mineral melt, converting it into stone wool fibres and air supply means for blowing the fibres axially along the chamber, and

collector means comprising a conveyor in the base of the chamber for collecting the blown fibres as a web and for carrying them away from the fiberising means.

The fiberising means comprises a set of rotors each mounted for rotation about a different substantially horizontal axis and arranged such that, when the rotors are rotating, melt poured onto the periphery of the top rotor in the set is thrown an to the periphery of the subsequent rotor (or onto the periphery of each subsequent rotor in sequence) in the set and mineral fibres are thrown off the or each subsequent rotor.

Typically the acceptable production of such a fiberising apparatus is normally in the range 4 to 10 tons per hour but to make products of the invention it needs to be reduced generally to around 2 to 4, often 2 to 3, tons per hour and it is necessary to blast air as a wall jet along part or all the periphery of most or all of the rotor, preferably with both axial and tangential velocity components.

The overall apparatus in which the stone wool is made will comprise a fiberising chamber, the fiberising means for receiving stone melt and converting it into stone wool fibres, and air supply means for blowing the fibres axially along the chamber, and collector means comprising a conveyor in the base of the chamber for collecting the blown fibres as a web and for carrying them away from the fiberising means. To make the wool of the invention, there are preferably at least two, for instance three to six fiberising means in the chamber and each runs at the above-described relatively low throughput. By this means it is possible for the fiberising chamber to produce an amount of wool that is reasonably conventional but a quality of wool that, in accordance with the invention, is far superior to any mineral wool produced previously from molten stone. Preferably there is a very high acceleration field on the fibre-forming rotors and preferably the air streams comprise wall jets on the fibre-forming rotors.

Suitable apparatus comprises

a fiberising chamber,

at least two fiberising means in side-by-side relationship in the chamber each constructed for receiving rock melt and converting it into rock wool fibres,

air supply means for blowing the fibres axially along the chamber, and

collector means comprising at least one conveyor in the base of the chamber for collecting the blown fibres and carrying them away from the fiberising means as stone wool,

and each fiberising means comprises a set of at least three rotors each mounted for rotation about a different horizontal axis and arranged such that when the rotors are rotating melt poured on to the periphery of the top rotor in the set is thrown on to the periphery of each subsequent rotor in turn and fibres are thrown off the rotors,

and each of the said subsequent rotors in the set is provided with driving means and has a size such that it can rotate to give an acceleration field of above 250km/s$^2$, all the rotors in the set have a diameter of below 250mm, and the air supply means comprise an air supply slot associated with each of the said subsequent rotors wherein each slot has an internal diameter substantially the same as the external diameter of the periphery of its associated rotor and is constructed for discharging an air blast substantially parallel to that periphery. Preferably the air blast has both axial and tangential components of velocity.

The acceleration field is the centripetal acceleration and in this specification by referring to the acceleration field of a rotor we mean the value G

where

$$G = r\Omega^2$$

r is the radius of the respective rotor and

4

Ω is the angular velocity of that rotor where

$$\Omega = \frac{2\pi n}{60}$$

where n is the revolutions per minute.

The novel stone wool can be made using such apparatus wherein stone melt having a temperature of from 1300 to 1700°C, often 1400 to 1600°C, most preferably 1500 to 1550°C is poured on to the top rotor in each set, each of the other rotors in each set provide the acceleration field of at least 250km/s$^2$, and air is forced through each of the slots and along its associated rotor as a wall jet, often with both axial and tangential velocity components.

Preferably the amount of melt fed on to each of the fiberising means is below 4 or 5 tons (often 2 to 3 tons) per hour but, since there are at least two fiberising means in the fiberising chamber, the production of the chamber generally is at least 8 tons and often at least 10 or even 12 tons per hour.

The excellent fibre quality obtainable by this process is thought to be due to a combination of the very high acceleration field, the provision of the wall jet over the surface that is subject to this very high acceleration field, and the ability to achieve good productivity at low throughput of each fiberising means.

In US-A-3,709,670 and 4,119,421 each set of rotors is a mirror image of the other, and this means that the operator will have to have two different sets of rotors in his plant and will have to maintain a stock of replacement parts for each type of rotor set. Preferably, in the invention, each set of rotors is identical in each of the fiberising means and this has the advantage that it is only necessary to maintain a single set of replacement parts.

By saying that the sets of rotors are identical to one another we mean that they are interchangeable with one another without any adverse effect on the performance of the apparatus. Naturally there can be minor, arid insignificant, differences between the sets. Often each entire fiberising means is identical in this sense, so that a fiberising means comprising the housing, the rotors and the air slots around the rotors, is interchangeable with another fiberising means.

Preferably the largest rotors are much smaller than the largest rotors in conventional commercial apparatus, but the number of revolutions per minute, and therefore the peripheral velocity, are both greater than with conventional apparatus. As a result, the acceleration field is very much greater than with conventional apparatus. Thus, whereas prior to the invention the general trend was to increase the size of some or all of the fiberising rotors, in the invention the largest rotors are smaller but faster than is conventional with the result that the acceleration force on them all is very much more than is conventional.

Whereas in conventional apparatus the highest acceleration field is generally less than 100km/s$^2$ or at the most 140km/s$^2$ (140,000 metres per second$^2$) on the largest rotor, with lower values on the preceding rotors, to make the novel products preferably all the rotors other than the top rotor in the set, have an acceleration field of above 250km/s$^2$. Preferably the third, and the fourth rotor if present, have an acceleration field of above 300km/s$^2$. The last rotor in the set can have an acceleration field above 300km/$^2$ and often above 350km/s$^2$. Adequate results can be obtained with the final rotor, and often the second and third rotors, providing an acceleration field of not more than 400, 450 or 500km/s$^2$, but very much higher acceleration fields can be provided and can result in improved product quality. For instance acceleration fields of up to 750km/s$^2$ or even up to 1000km/s$^2$ can give very good products but it is then generally necessary for the rotor diameters to be at the bottom end of the ranges quoted below, for instance 130 to 170mm.

The rotors for these very high speeds can be made from steel conventionally used for fiberising rotors because they can all be of low diameter. The rotors can be mounted in special bearings for high revolutions, for instance tilting-pad slide bearings (for example make Glacier), magnetic bearings (for instance make S2M) or an angular contact ball bearing mounted with oil film damping (for instance make SKF or FAG).

Generally they all have diameter below 220mm but usually above 100mm, often above 130mm. Often the top rotor is from 100 to 180mm while the others are usually larger than the top rotor and in the range 140 to 210mm.

Whereas previously it has been conventional for each rotor to be larger than the preceding one, in the invention it is convenient for all the rotors other than the top rotor to be of substantially the same size.

The rotors generally all rotate at 10,000 to 40,000rpm. The second, third and, if present, fourth rotors generally rotate at from 14,000 to 35,000, often 15,000 to 30,000, rpm while the top rotor generally rotates at from 10 to 20,000rpm, often 12,000 to 15,000rpm.

The acceleration field of the top rotor is preferably at least 50km/s$^2$ and often is at least 100km/s$^2$ but it is generally unnecessary for it to be above 200km/s$^2$, with values of around 120 to 160km/s$^2$ often being preferred. This is very much greater than in existing apparatus, where the value typically does not exceed 15km/s$^2$ on the top rotor.

The ratio of the peripheral velocity of one rotor to the velocity of the preceding rotor is generally from 1:1 to 1.5:1, preferably around 1.1:1 to 1.3:1.

There is an air supply slot associated with each fiberising rotor close to that rotor for discharging an air blast close to and substantially parallel to the periphery of the rotor with an axial component for carrying the mineral wool fibres axially off that periphery. When the air is to have a tangential component of velocity preferably there are direction means for selecting the angle of the discharged air relative to the axial direction. The direction means can be arranged to direct the air at an angle that varies along the length of the slot between the higher angle that is co-rotational with the slot and a lower angle.

As a result of having these direction means directing the air at different angles within the same set, it is now possible to optimise the air flow at each part of each set. As a consequence of this, it is for the first time possible to optimise the air flows in one set in relation to the air flows in the adjacent set, and thus it is possible to obtain very good fiberising results even though the sets of rotors can be very close to one another and can be identical to one another.

Preferably the internal diameter of the slot is the same as the external diameter of the periphery of the associated rotor and the slot is constructed to direct the air blast parallel to the surface of that rotor, since this will then lead to the formation of a wall jet. However the internal diameter of the slot can be a few millimetres more than the diameter of the periphery of the rotor and/or the angle of the air blast can be at a small conical angle with respect to the periphery of the rotor provided the difference in diameter and/or the angle are such that a wall jet is still formed. Whether or not this is occurring can easily be established by identifying the velocity profile adjacent to the surface. When a wall jet exists, the greatest velocity is close (e.g., within 10mm) to the surface both at the rear edge of the rotor and at the front edge of the rotor.

In the preferred apparatus there should be an air slot associated with each of the second, third and, if present, fourth rotors in each of the fiberising means, but is less important whether or not there is an air slot associated with the top rotor in each fiberising means.

Generally each slot extends around at least 1/3 of the periphery of its associated rotor, generally around the outer part distant from the other rotors in the set. Generally it extends around not more than 2/3 or 3/4 of the periphery.

Each slot generally leads from an air supply chamber within a housing on which the rotors are mounted.

The direction of air from each slot can be wholly axial but it is often desirable for it to have a corotational tangential component at least in some parts of the slot. For instance the tangential velocity can be up to 30% or even up to 50% or more of the peripheral velocity of the rotor. Typically the tangential component of the air stream has a velocity of from 80 to 100 metres per second, but values down to 50 metres per second or less can be useful. The linear velocity of the air stream generally is in the range 100 to 300 metres per second, often 100 to 200m/s.

The air slot can consist of inner and outer slots, wherein the inner slot provides an inner blast of air that is sufficiently close to the surface to form a wall jet and the outer slot provides an outer blast of air that merges with the inner blast so as to give a wall jet effect to the combined blasts. Generally the inner surface of the outer slot is not more than 20 or 30 mm radially from the surface of the rotor and generally it is within 10mm. Preferably the inner and outer blasts have different angles of travel at the time of exiting from their slots. For instance the inner bast can be wholly axial and the outer slot can contain the direction means to cause the outer blast to have the desired tangential component.

For optimum results it is important to control the relative positions of the axes of the various rotors and, especially, the relative positions of the axes of the first and second rotors. Preferably the second rotor is slightly below the first rotor such that a line joining the two axes is at an angle of 0 to 20, often 5 to 10, degrees to the horizontal. Generally the melt is fed on to the rotor at a position such that a line from that point of contact to the axis of the first rotor makes an angle of from 40 to 65, generally 45 to 60, degrees to that horizontal. As a result, the rotational distance from the point where the melt contacts the first rotor to the line joining the axes of the first and second rotors is generally in the range 45 to 80°, preferably 50 to 70°.

Preferably each fiberising means consists of four rotors and preferably each fiberising chamber contains at least three, often up to six, sets of fiberising means. Each fiberising means generally has associated with it means for spraying binder into the fibres that are being collected. Suitable binder sprays can be mounted on the rotors and/or elsewhere around the fiberising means, in known manner. Secondary air supplies may be provided around the fiberising means to promote collection of the fibres.

Apparatus suitable for making products of the invention is illustrated by reference to the accompanying drawings in which:

Figure 1 is a front view of a set of rotors assembled at one end of a fiberising chamber for use in apparatus suitable for making products according to the invention;

Figure 2 is a cross-section on the line II-II through a set of rotors in Figure 1 and through the collecting chamber in which they are positioned in use; and

Figure 3 is a detail of the slot around one of the rotors.

Figure 4 is a front view of three of the sets of rotors arranged at one end of the chamber.

Figure 5 is a graph of Lambda against density for a standard mineral wool and that obtained in the present invention.

The apparatus includes three sets 1 of rotors each mounted on the front face 2 of a housing 3. They are positioned at one end of a chamber to receive melt from channels 35 that lead from a melt furnace. Each rotor is mounted in conventional manner on a driven axle that allows it to be rotated at high peripheral speed. The set consists of four rotors, a top rotor 4 that rotates anti-clockwise, a second fiberising rotor 5 that rotates clockwise, a third fiberising rotor 6 that rotates anti-clockwise, and a fourth fiberising rotor 7 that rotates clockwise. The bearings and drive mechanisms are not shown. Air slots 8, 9, 10 and 11 are associated with, respectively, the rotors 4, 5, 6 and 7, each slot extending around part only of the rotor.

Molten mineral melt is poured on to the rotor 4 along the path that terminates at point A that preferably makes an angle B with the horizontal from 40 to 65°, preferably 45° to 60°.

The second fiberising rotor 5 should be positioned at or only slightly below the first rotor and so the angle C typically is from 0° to 20°, often around 5 to 10°.

By this means, it is possible to ensure that melt that is thrown off the first rotor on to the second rotor impacts on the peripheral surface of the second rotor substantially at right angles (e.g., from 75 to 105° to the normal). Similarly, it is preferred that the sum of angles D, E and F should be as low as possible. F is the included angle between the horizontal and the line joining the axes of the third and fourth rotors, E is the included angle between the lines joining the axes of the third and fourth rotors and the second and third rotors, while D is the included angle between lines joining the axes of the first and second rotors with the axes of the second and third rotors. Preferably C + D + E + F is below 150° but should generally be above 120°, and most preferably it is in the range 125 to 142°, with best results being obtained at around 135 to 140°.

Some of the melt striking the top rotor 4 at A may be thrown off the rotor 4 as fibres but most or all is thrown on to subsequent rotor 5. Some of the melt is fiberised off that rotor whilst the remainder is thrown along path 13 on to subsequent rotor 6. A significant amount of this is fiberised off rotor 6, mainly in the area where there is slot 9, but some is thrown along path 14 on to the subsequent rotor 7. A significant amount is fiberised in the general direction 15 but a large amount is also fiberised around the remainder of the rotor surface included within slot 10.

Since the slots 8, 9, 10 and 11 do not extend around the entire periphery of each rotor, the air flow in the region of paths 12, 13 and 14 can be controlled and, indeed, can be substantially zero.

The top, or first, rotor may have a size of about 150mm and preferably each of the other rotors has a size of around 200, and thus the ratio of the last to first is around 1.2:1 to 1.5:1, preferably around 1.33:1.

The speed of rotation of the rotors is, preferably, around 13,000, 15,000, 17,000 and 19,000rpm respectively and thus the ratio of the speed of the last rotor to the first rotor is typically around 1.2 to 1.7, preferably around 1.5 :1.

The acceleration force on the top rotor is then around 140,000m/s$^2$ and on the other rotors is, respectively, around 245,000, 312,000 and 390,000m/s$^2$ respectively.

The rate of supply of melt onto each top rotor is generally in the range 2 to 3 tons/hour and so typically the entire apparatus runs at 7.5 to 12.5 tons/hour.

The air emerging through the slots preferably has a linear velocity of 100 to 200m/s. This air flow may have both axial and tangential components, or solely axial.

In order to control the angle of air flow, within each slot blades 25 can be mounted at an angle, relative to the axial direction of the associated rotor, that can be predetermined at a value ranging, typically, from zero to 50°. For instance, in slot 10 the angle in the region G to H can increase from 0° at G to about 20° at H and then the angle of the blades in the region H to I can be substantially uniform at 45°. Similarly, in slot 10 the angle can increase from about zero at J up to about 20° at K and can then increase and be substantially uniform throughout the region K to L at an angle of about 45°.

In slot 8, it may be preferred to have a lesser angle, typically a uniform angle of around 15 to 30°, often around 20 or 25°.

Although it is convenient to supply the air through the slots, a similar effect can be achieved by other means of providing a continuous curtain of air over the rotor surface, for instance a series of adjacent blast nozzles arrnaged around the rotor in the position shown in the drawings for the slots and that will lead to the formation of a wall jet.

The inner edge 24 of each slot is preferably coaxial with the associated rotor and preferably has a diameter that is substantially the same as the associated rotor.

Binder sprays 18 can be mounted as a central nozzle on the front face of each rotor and eject binder into the fibres that are blown off the rotor. Instead of or in addition to this, separate binder sprays may be provided, for instance beneath or above the set of rotors and directed substantially axially.

The fiberising chamber comprises a pit 20 having a double screw 21 that collects pearls and other fibre that drops into the pit and recycles them to the furnace. A conveyor 22 collects the fibres and carries them away from the spinners. Air is forced through a secondary air ring, for instance a plurality of orifices 23 arranged around the front face of the housing 2 and/or in and/or beneath the front face of the housing 2. The secondary air ring provides an air stream to promote the axial transport of the fibres away from the rotors and to control their rate of settlement and the intermixing with binder.

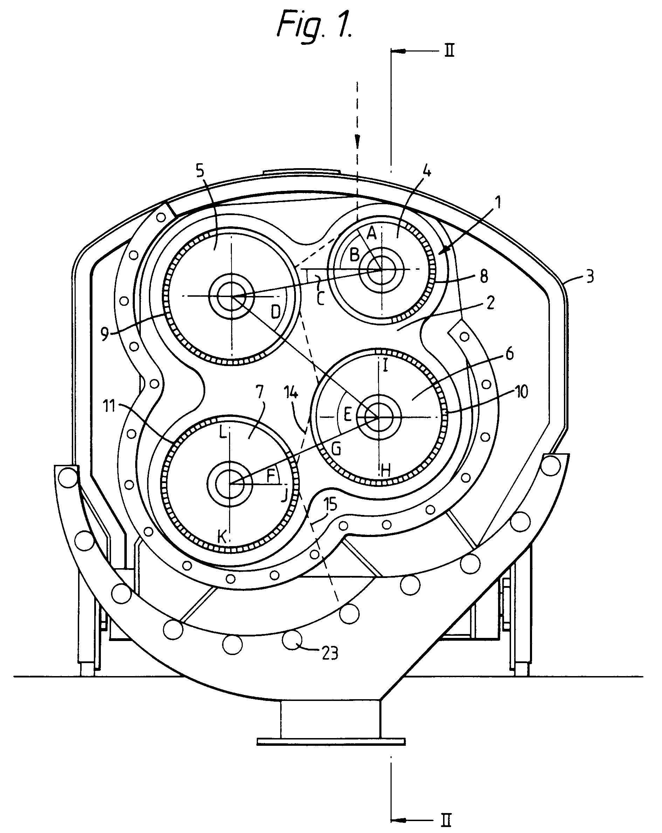

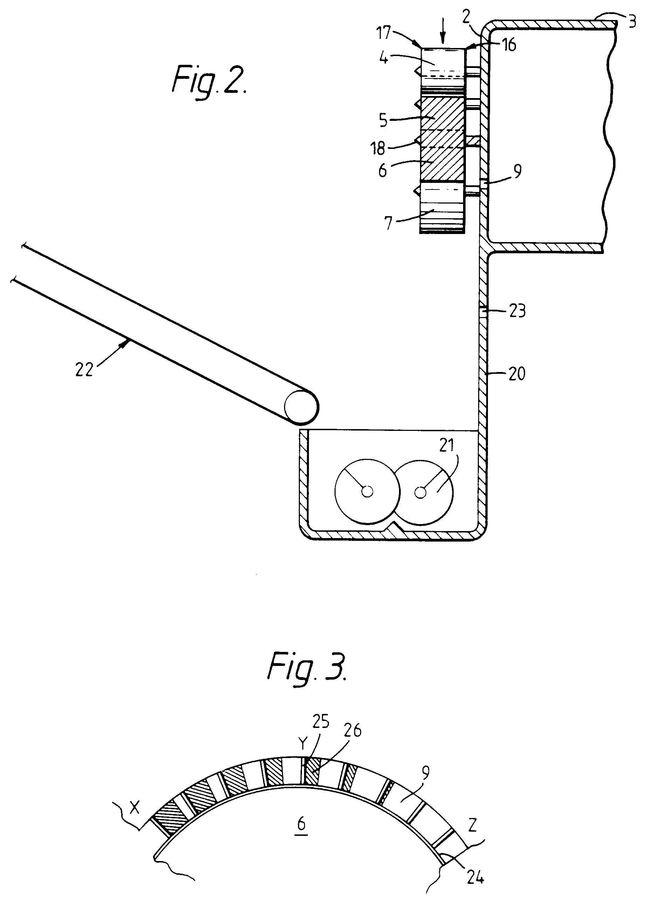

It will be seen from Figure 3 that the inner edge 24 of the annular slot has substantially the same diameter as the outer edge of the periphery of rotor 6 and that the blades 25 are arranged substantially radially across the slot. Of course, if desired, they may be arranged at an angle. The leading edge of the blades is shown as 25, and the side face the blades is shown as 26. In Figure 3, position X corresponds approximately to position I in Figure 1, i.e., where the blades are arranged at about 42°, position Y corresponds to position H, i.e., where the blades are arranged at around 20°, and position G corresponds to position Z, i.e., where the blades are at 0° and thus promote truly axial flow of the air.

Although only a single air inlet 23 is illustrated in Figures 1 and 2, preferably there are a plurality of individually mounted air slots that are mounted beneath the rotors and that direct air in a generally forward direction. Some or all of them are pivotally mounted so that they can be relatively horizontal or relatively vertical or otherwise inclined. Also they can have blades that control the direction of air from the slot. Also, the blades can be mounted for reciprocating motion in order that they can be reciprocated during use so as to provide a pulsating air stream. Generally the slots point upwards so as to direct air upwardly and forwardly. By appropriate choice of air streams, and their movement if any, it is possible to optimise fibre collection, binder distribution, and the properties of the final product.

In an example, the spinning chamber is provided broadly as shown in the drawings but with three substantially identical fiberising means each having a set of four rotors. The first rotor has a diameter of 150mm while the other three all have diameters of 200mm. The rotors rotate at, respectively, 13,000, 15,000, 17,000 and 19,000rpm. This gives acceleration fields of $139km/s^2$, $246km/s^2$, $312km/s^2$ and $391km/s^2$ respectively. The inner periphery of each of the slots 9, 10 and 11 has a radius identical to the radius of the periphery of the associated rotor. Air is forced out of the slots at a linear speed of 120 m/s. The blades are arranged at different angles within the slots, as described above, so that the air flow is substantially axial where the rotors are close to one another and is split into approximately equal axial and tangential components at the outermost positions on the rotors.

Mineral melt of the following composition: 49% $SIO_2$, 13% $Al_2O_3$, 2.1% Ti0, 5.3% FeO, 14.2% CaO, 9.7% MgO, 2.6% $Na_2O$, 1.1% $K_2O$ is poured on to each top rotor at a position A that makes an angle B of 60°C with the horizontal. Angles C, D, E and F are, respectively, 10°, 48°, 63° and 24°. The temperature of the melt when it flows down to the tope rotor is 1500°.

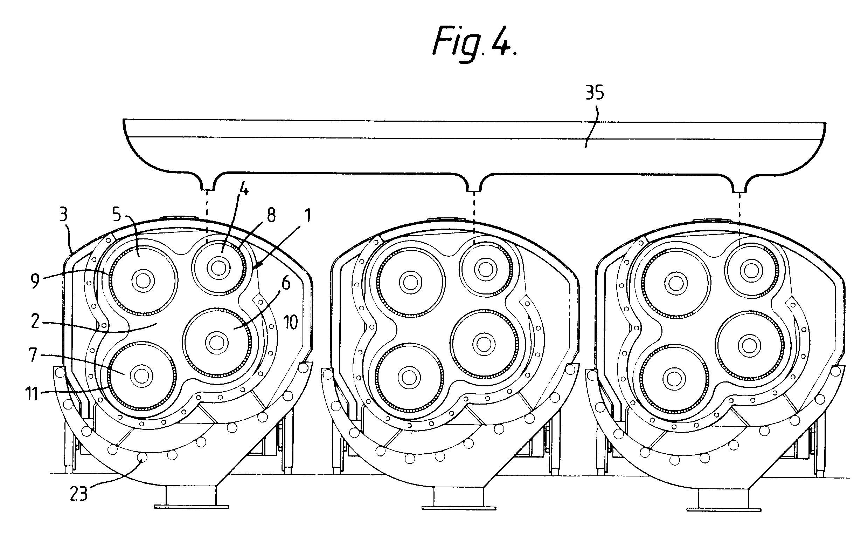

Around each fiberising means 5000 $m^3/h$ primary air is blown through the slots 9, 10 and 11 and 5000 $m^3/h$ secondary air is blown through the slots 23 through reciprocating outlets 30, 31 and 32 as shown in Figure 4 and binder is sprayed both coaxially as shown in Figure 2 and from binder sprays arranged around the fiberising means. The rate of feed of melt on to each top rotor is about 2.5 tons per hour giving a total feed to the chamber of 7.5 tons per hour. A small amount of this is recovered as shot from the pit 21 but the great majority is recovered as the bonded stone wool batts.

The fibres are collected on conveyor 22 and compressed to various densities. The density and the associated Lambda value are shown in the table above in the column head "Example". Thus the batt having Lambda 36 has a density of $20kg/m^3$ while the batt having Lambda 34 has density $27kg/m^3$.

Analysis of the batt shows that it consists of (based on inorganic material) about 80% by weight fibres and total shot above $63\mu m$ about 20% of which about 0.7% is above $250\mu m$. Average fibre diameter is about $2\mu m$ and average fibre length is about 3 giving a ratio of length:diameter of about 1500. Tensile strength is $14kN/m^2$

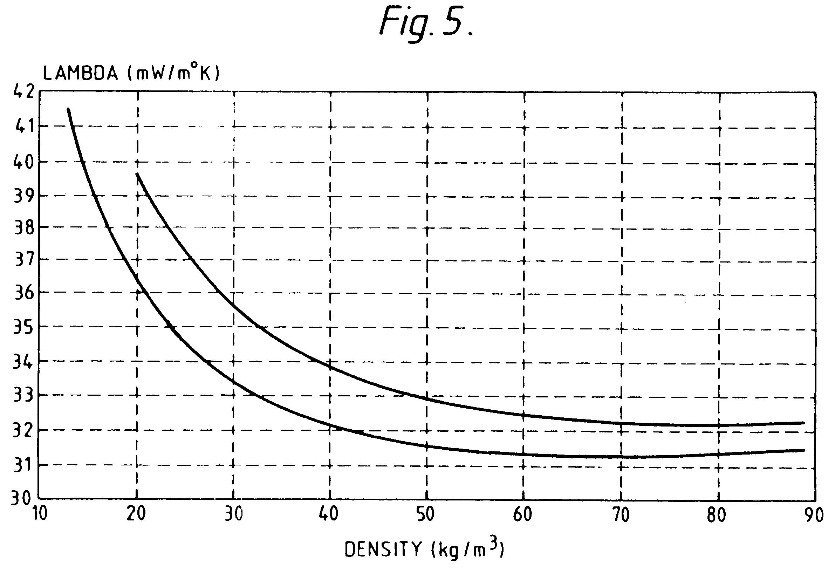

In Figure 5 the upper curve represents a standard mineral wool made by a process such as described in GB-A-1,559,117 and the lower curve represents the stone wool of the present invention when the

EP 0 567 487 B1

apparatus was run according to the above example.

The graph illustrates that with the process of the invention it is possible to achieve equivalent Lambda values to a standard mineral wool but at a lower density ie. using a lower amount of mineral wool, and thereby reducing production costs.

Also, the lower curve approaches, and is often close to, the curve obtained with glass wool. Accordingly it is possible for the first time to obtain conductivity properties in the invention using stone wool that approach those of glass wool despite the much cheaper manufacutring and material costs.

**Claims**

1. Stone wool formed from stone melt and consisting of 70 to 90% by weight stone wool fibres having a diameter of up to $5\mu m$, 0 to 5% by weight stone wool fibres having a diameter above $5\mu m$, and 10 to 25% by weight shot having a diameter of at least $63\mu m$, and in which the average diameter of the fibres is from 1 to $4\mu m$, the ratio of average fibre length:average diameter is 1,000 to 3,000, the density is from 15 to 100kg/m$^3$ and the thermal conductivity Lambda is from 30 to 40mW/m°K at 10°C and the relationship between density and Lambda is as set out in the following table.

| Lambda | Maximum Density | Minimum Density |
|--------|-----------------|-----------------|
| 40 | 16 | 12 |
| 38 | 18 | 13 |
| 36 | 22 | 15 |
| 35 | 24 | 18 |
| 34 | 29 | 20 |
| 33 | 33 | 23 |
| 32 | 40 | 28 |
| 31 | 55 | 38 |
| 30 | 85 | 50 |

2. Stone wool according to claim 1 in which the amount of fibres having an average diameter of up to $3.5\mu m$ is 75 to 88%, preferably 77 to 83%.

3. Stone wool according to claim 1 or claim 2 in which the amount of fibres having a diameter above $5\mu m$ is 4 to 6%.

4. Stone wool according to any preceding claim in which the amount of shot having a diameter of at least $63\mu m$ is from 15 to 22%.

5. Stone wool according to any preceding claim in which the amount of shot having a diameter greater than $250\mu m$ is 0 to 2%, preferably 0 to 1%.

6. Stone wool according to any preceding claim in which the average diameter of the fibres is from 2.0 to $3.5\mu m$.

7. Stone wool according to any preceding claim in which the ratio of average fibre length to average diameter is from 1,100 to 2,000 preferably 1,200 to 1,600.

8. Stone wool according to any preceding claim having a tensile strength of from 6 to 14kN/m$^2$.

9. Stone wool according to any preceding claim in which the stone is selected from rock, slag, diabase or basalt.

10. Stone wool according to any preceding claim additionally including binder.

9

**Patentansprüche**

1. Steinwolle gebildet aus Steinschmelze und bestehend aus 70 bis 90 Gew. % Steinwollefasern mit einem Durchmesser von bis zu 5 $\mu$m, 0 bis 5 Gew. % Steinwollefasern mit einem Durchmesser von mehr als 5 $\mu$m und 10 bis 25 Gew. % körnigem Pulver mit einem Durchmesser von mindestens 63 $\mu$m und in der der mittlere Durchmesser der Fasern 1 bis 4 $\mu$m beträgt, das Verhältnis mittlere Faserlänge: mittlerer Faserdurchmesser 1.000 bis 3.000 beträgt, die Dichte 15 bis 100 kg/m$^3$ beträgt und die Wärmeleitfähigkeit Lambda bei 10°C 30 bis 40 W/m°K bei 10°C beträgt und die Beziehung zwischen Dichte und Lambda wie in der folgenden Tabelle dargestellt ist:

| Lambda | Maximale Dichte | Minimale Dichte |
|--------|-----------------|-----------------|
| 40 | 16 | 12 |
| 38 | 18 | 13 |
| 36 | 22 | 15 |
| 35 | 24 | 18 |
| 34 | 29 | 20 |
| 33 | 33 | 23 |
| 32 | 40 | 28 |
| 31 | 55 | 38 |
| 30 | 85 | 50 |

2. Steinwolle nach Anspruch 1, in der die Menge an Fasern mit einem mittleren Durchmesser von bis zu 3,5 $\mu$m 75 bis 88 %, vorzugsweise 77 bis 83 % beträgt.

3. Steinwolle nach Anspruch 1 oder Anspruch 2, in der die Menge an Fasern mit einem Durchmesser von mehr als 5 $\mu$m 4 bis 6 % beträgt.

4. Steinwolle nach einem der vorhergehenden Ansprüche, in der die Menge an körnigem Pulver mit einem Durchmesser von mindestens 63 $\mu$m 15 bis 22 % beträgt.

5. Steinwolle nach einem der vorhergehenden Ansprüche, in der die Menge an körnigem Pulver mit einem Durchmesser von mehr als 250 $\mu$m 0 bis 2 %, vorzugsweise 0 % bis 1 % beträgt.

6. Steinwolle nach einem der vorhergehenden Ansprüche, in der der mittlere Durchmesser der Fasern 2,0 bis 3,5 $\mu$m beträgt.

7. Steinwolle nach einem der vorhergehenden Ansprüche, in der das Verhältnis der mittleren Faserlänge zum mittleren Durchmesser 1.100 bis 2.000, vorzugsweise 1.200 bis 1.600 beträgt.

8. Steinwolle nach einem der vorhergehenden Ansprüche mit einer Zugfestigkeit von 6 bis 14 kN/m$^2$.

9. Steinwolle nach einem der vorhergehenden Ansprüche, in der der Stein ausgewählt ist aus Fels, Schlacke, Grünstein oder Basalt.

10. Steinwolle nach einem der vorhergehenden Ansprüche, zusätzlich enthaltend ein Bindemittel.

**Revendications**

1. Laine de roche formée à partir de roches fondues et constituée de 70 à 90 % en poids de fibres de laine de roche ayant un diamètre pouvant atteindre 5 $\mu$m, 0 à 5 % en poids de libres de laine de roche ayant un diamètre supérieur à 5 $\mu$m, et de 10 à 25 % en poids de particules ayant un diamètre d'au moins 63 $\mu$m, le diamètre moyen des fibres étant compris entre 1 et 4 $\mu$m, le rapport de la longueur moyenne au diamètre moyen des libres étant compris entre 1 000 et 3 000, la masse volumique étant comprise entre 15 et 100 kg/m$^3$ et la conductibilité thermique lambda étant comprise entre 30 et 40 mW/mK à 10 °C, et la relation entre la masse volumique et le coefficient lambda est établie par le tableau suivant

EP 0 567 487 B1

| Lambda | Masse volumique maximale | Masse volumique minimale |
|--------|--------------------------|--------------------------|
| 40 | 16 | 12 |
| 38 | 18 | 13 |
| 36 | 22 | 15 |
| 35 | 24 | 18 |
| 34 | 29 | 20 |
| 33 | 33 | 23 |
| 32 | 40 | 28 |
| 31 | 55 | 38 |
| 30 | 85 | 50 |

2. Laine de roche selon la revendication 1, dans laquelle la quantité de libres ayant un diamètre moyen inférieur ou égal à 3,5 $\mu$m est comprise entre 75 et 88 % et de préférence entre 77 et 83 %.

3. Laine de roche selon la revendication 1 ou 2, dans laquelle la quantité de libres ayant un diamètre supérieur à 5 $\mu$m est comprise entre 4 et 6 %.

4. Laine de roche selon l'une quelconque des revendications précédentes, dans laquelle la quantité de particules ayant un diamètre au moins égal à 63 $\mu$m est comprise entre 15 et 22 %.

5. Laine de roche selon l'une quelconque des revendications précédentes, dans laquelle la quantité de particules ayant un diamètre supérieur à 250 $\mu$m est comprise entre 0 et 2 % et de préférence entre 0 et 1 %.

6. Laine de roche selon l'une quelconque des revendications précédentes, dans laquelle le diamètre moyen des fibres est compris entre 2,0 et 3,5 $\mu$m.

7. Laine de roche selon l'une quelconque des revendications précédentes, dans laquelle le rapport de la longueur moyenne au diamètre moyen des fibres est compris entre 1 100 et 2 000 et de préférence entre 1 200 et 1 600.

8. Laine de roche selon l'une quelconque des revendications précédentes, ayant une résistance à la traction comprise entre 6 et 14 kN/m$^2$.

9. Laine de roche selon l'une quelconque des revendications précédentes, dans laquelle les roches sont choisies parmi les roches, le laitier, la diabase et le basalte.

10. Laine de roche selon l'une quelconque des revendications précédentes, contenant en outre un liant.

11

# Fig. 1.

# Fig.2.

# Fig. 3.

# Fig.4.

EP 0 567 487 B1

*Fig. 5.*

LAMBDA (mW/m°K)

DENSITY (kg/m³)

EP 0 567 487 B1